**Europäisches Patentamt**

**European Patent Office**

**Office européen des brevets**

(11) Numéro de publication: **0 099 315**
**B1**

(12) **FASCICULE DE BREVET EUROPEEN**

(45) Date de publication du fascicule du brevet:
**29.10.86**

(51) Int. Cl.⁴: **A 01 N 1/02**

(21) Numéro de dépôt: **83440040.0**

(22) Date de dépôt: **08.07.83**

(54) Solution protectrice pour la conservation de cellules fonctionnelles.

(30) Priorité: **09.07.82 FR 8212324**
**16.03.83 FR 8304426**

(43) Date de publication de la demande:
**25.01.84 Bulletin 84/4**

(45) Mention de la délivrance du brevet:
**29.10.86 Bulletin 86/44**

(84) Etats contractants désignés:
**AT BE CH DE GB IT LI LU NL SE**

(56) Documents cités:
**US - A - 4 267 269**

**CHEMICAL ABSTRACTS, vol. 96, no. 24, 14 juin 1982,
page 378, no. 205391g, Columbus, Ohio, USA
CHEMICAL ABSTRACTS, vol. 88, no. 9, 27 février 1978,
page 235, no. 60557p, Columbus, Ohio, USA, D.
STRAUSS et al.: "Variations of viability and ATP and
2,3-DPG levels in resuspended erythrocytes during
multiweek cold storage"**

**Le dossier contient des informations techniques
présentées postérieurement au dépôt de la demande et
ne figurant pas dans le présent fascicule.**

(73) Titulaire: **CENTRE REGIONAL DE TRANSFUSION
SANGUINE (Association de droit privé), 10 rue
Spielmann, F-67000 Strasbourg (FR)**

(72) Inventeur: **Baur épouse Kane, Odile, 2 rue du
Falkenstein Hoenheim, F-67800 Bischheim (FR)**
Inventeur: **Goll, Serge, 9 rue Michel Baltzer,
F-67100 Strasbourg (FR)**
Inventeur: **Laurent épouse Tromp, Chantal, 24 rue
Oberlin, F-67000 Strasbourg (FR)**
Inventeur: **George, Eric, 15 rue Saint Marc,
F-67000 Strasbourg (FR)**

(74) Mandataire: **Nuss, Pierre, 10, rue Jacques Kablé,
F-67000 Strasbourg (FR)**

## Description

L'invention couvre le domaine transfusionnel.

La solution, objet de la présente invention se propose de conserver aux hématies humaines décongelées toutes leurs qualités pendant la conservation in vitro.

Dans la description ci-après sont utilisées les abréviations suivantes:

| | |
|---|---|
| SAG | saline, adénine, glucose, |
| SAG-MANNITOL | saline, adénine, glucose, mannitol |
| PAGG.S | phosphate, adénine, glucose, guanosine, saline |
| PAGGS-SORBITOL | phosphate, adénine, glucose, guanosine, saline, sorbitol |
| ATP | adenosine, triphosphate |
| 2.3 DPG | 2.3 diphosphoglycérate |
| Hb | hémoglobine |
| mg | milligramme |
| $\mu$mol/g/Hb | micromoles par gramme d'hémoglobine |
| 51 Cr | chrome 51 |
| CE | charge énergétique |
| X | valeur moyenne |
| S | écart type |
| ACD | acide, citrate, dextrose |

Les modèles choisis pour les exemples sont des hématies humaines ayant subi un cycle de congélation-décongélation, le cryoprotecteur employé lors de la congélation étant le glycérol en concentration finale de 17,4%.

Des solutions de conservation ont été proposées pour des suspensions d'hématies humaines fraîches, les solutions suivantes ont déjà été étudiées:

SAG
SAG-mannitol
PAGG.S
PAGGS-sorbitol

Ces solutions permettent une bonne conservation des hématies fraîches. Appliquées à des hématies décongelées prises comme exemple, elles ont cependant, un très médiocre pouvoir protecteur qui ne permet pas la conservation de toutes les qualités des cellules étudiées.

Le SAG et le SAG-Mannitol assurent un bon bilan énergétique (mesure de l'ATP et de la charge énergétique) mais, par contre, le bilan fonctionnel est rapidement déficitaire (15% de 2.3 DPG au 5ème jour).

Le taux d'Hémoglobine, ou Hb libre est trop élevé dès le 1er jour de conservation (valeur $\geqslant$ 200 mg %).

Le PAGGS et le PAGGS-sorbitol assurent un meilleur bilan fonctionnel, mais l'hémolyse est encore trop élevée ($\geqslant$ 200 mg %) dès le 3ème jour de conservation.

Par ailleurs, il a également été proprosé, par Chemical Abstracts vol. 88 n° 9 du 27 février 1978 page 235 n° 60557 p et vol. 96 n° 24 du 14 juin 1982 page 378 n° 205391 g de conserver des cellules sanguines pendant une longue durée par utilisation de solutions protectrices contenant du SAG et du saccharose. Cependant, dans ce cas, le sang est prélevé sur ACD ou ACD-AG, et après décantation, avant d'ajouter la solution de conservation, les hématies sont en suspension dans un reste de plasma contenant déjà des substrats, et enrichi dans le cas de l'ACD-AG (glucose-adénine-guanosine). Elles subissent donc peu d'agressions. Ces solutions ne concernent que des hématies humaines conservées à +4°C et ne permettent pas une conservation de concentrés érythrocytaires décongelés.

En outre, ces solutions assurent un bilan énergétique et fonctionnel corrects, mais l'hémolyse est encore trop importante. C'est un milieu très compliqué qui a été mis au point pour la conservation de longue durée des hématies à l'état liquide.

D'autre part, une solution de saccharose tamponné a été mise au point par WOLFDIETRICH TOURSEL pour la conservation des suspensions d'hématies humaines décongelées. Le milieu a été étudié pendant 7 jours et ses résultats sont les suivants:

| jours | Hb libre | | AT P | | 2.3. DPG | |
|---|---|---|---|---|---|---|
| | x | S | x | S | x | S |
| 0 | 34 | 9 | 3.5 | 0.6 | 14.8 | 1.3 |
| 1 | 41 | 8 | 3.4 | 0.4 | 13.6 | 1.1 |
| 2 | 48 | 8 | 3.2 | 0.8 | 12.1 | 2.1 |
| 3 | 60 | 11 | 2.6 | 0.5 | 8.4 | 3.2 |
| 7 | 104 | 19 | 1.7 | 0.6 | 2.1 | 0.8 |

Si on accepte la limite de 2 $\mu$mol/g Hb que DERN fixe à l'ATP pour assurer une recirculation de 70% d'hématies marquées au 51 Cr 24 heures après transfusion, on voit que la conservation ne peut pas excéder 3 jours. Par contre, au jour 3, le 2.3 DPG conserve encore un taux correct.

TOURSEL propose d'ailleurs de conserver 3 jours les suspensions d'hématies décongelées protégées par son milieu.

La présente invention a pour but de pallier les inconvénients des solutions existantes.

Elle a, en effet, pour objet une solution protectrice pour la conservation d'hématies humaines décongelées, contenant de l'adénine, du glucose

du saccharose, et un tampon phosphates, caractérisée en ce qu'elle présente avantageusement la composition préférentielle suivante:

| | |
|---|---|
| Adénine | 0,085 g ± 0,010 |
| Glucose | 5 g ± 0,5 |
| Saccharose | 47 g ± 2 |
| Phosphate monosodique monohydraté | 0,75 g ± 0,08 |
| Phosphate disodique dihydraté | 4 g ± 0,5 |
| Chlorure de sodium | 2,5 g ± 0,5 |
| Eau distillée qsp | 1000 ml |

le pH du milieu étant égal à 7,40 ± 0,10 et son osmolarité à 320 ± 10 mOsm.

Le pouvoir tampon de la solution est élevé et ses constituants sont mélangés en proportions non toxiques.

Après mélange de la solution avec des hématies humaines décongelées, les paramètres suivants ont été étudiés:

– le pouvoir oxyphorique des suspensions d'hématies décongelées et leur variation en fonction du temps, mesurée par le 2.3 DPG.
– la viabilité mesurée par: ATP, charge énergétique, taux d'Hb libre du surnageant, taux de survie des hématies marquées au 51 Cr, variation de l'ammonium, résistance globulaire

Les fonctions biologiques sont toutes très bien conservées comme le montrent les graphiques des dessins annexés, dans lesquels:

la fig. 1 représente la variation du 2.3 DPG et du pH en fonction du temps;
la fig. 2 montre la variation en pourcentage de l'ATP en fonction du temps;
la fig. 3 représente la variation de la charge énergétique;
la fig. 4 représente la variation de l'ammonium, et
la fig. 5 montre la courbe du taux de survie des hématies marquées au chrome 51, 3 jours après décongélation.

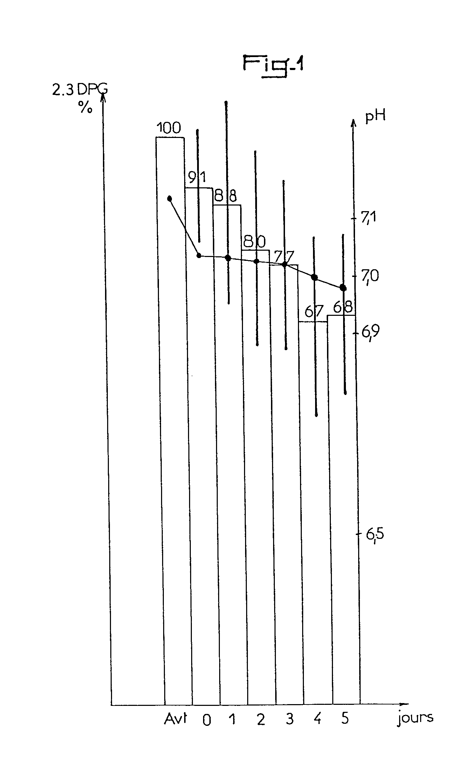

Dans les figures 1 à 3, la première colonne désignée par Avt représente le sang frais avant congélation.

Au jour 5 les normes fixées par la Commission des Contrôles de qualité de la Société Nationale de Transfusion Sanguine pour le sang décongelé au jour 0 sont largement dépassées. Actuellement le délai de conservation du sang décongelé est au maximum de 24 heures.

La solution objet de la présente invention, permet une conservation d'au moins une semaine des hématies décongelées prises comme exemple. Cette longue conservation permet, pour cet exemple, une transfusion différée en cas de transport, support de banque, décongélation à l'avance en vue d'opérations programmées. Une gestion plus aisée de la banque de sang congelé permettrait de faire d'importantes économies de travail et d'argent.

Tous les histogrammes et courbes concernant ce travail sont présentés dans les dessins annexés et montrent les valeurs élevées de tous les paramètres étudiés avant congélation et pendant 5 jours après la décongélation.

Les hématies sont congelées selon la technique de KRIJNEN, conservées à –155° en phase gazeuse d'azote, décongelées à +42° et lavées en machine lave-globule automatique.

En fin de lavage, le sang décongelé se présente en concentrés globulaires ayant un hématocrite moyen de 78%. Les hématies sont alors mises en suspension dans un demi-volume de solution protectrice et les divers contrôles de qualité sont pratiqués chaque jour à l'exception de la mesure de l'Hb libre qui est pratiquée à partir du jour 1 sur le surnageant après sédimentation spontanée des hématies conservées à +4°.

L'étude des contrôles de qualité effectuée pendant les 5 jours qui suivent la décongélation montre:
– 2.3. DPG très bonne conservation de ce métabolite essentiel, qui n'est diminué que de 30% par rapport au sang frais au jour 5 (figure 1)
– ATP après une chute moyenne au jour 1, le taux d'ATP monte régulièrement pour atteindre des valeurs de 177% du sang frais au jour 5 (figure 2)

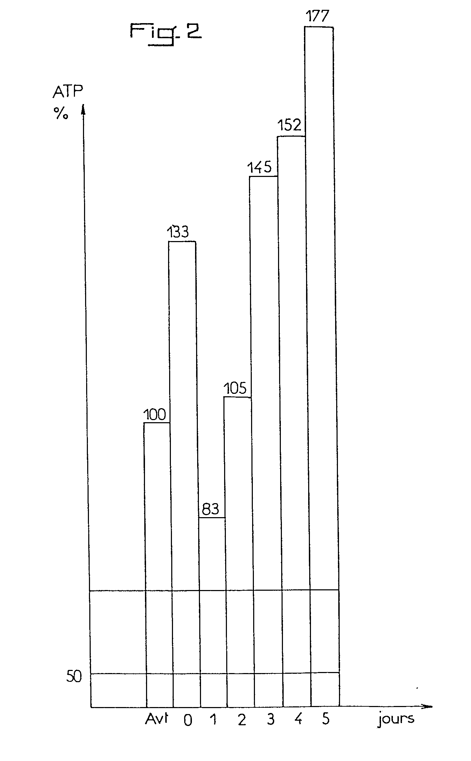

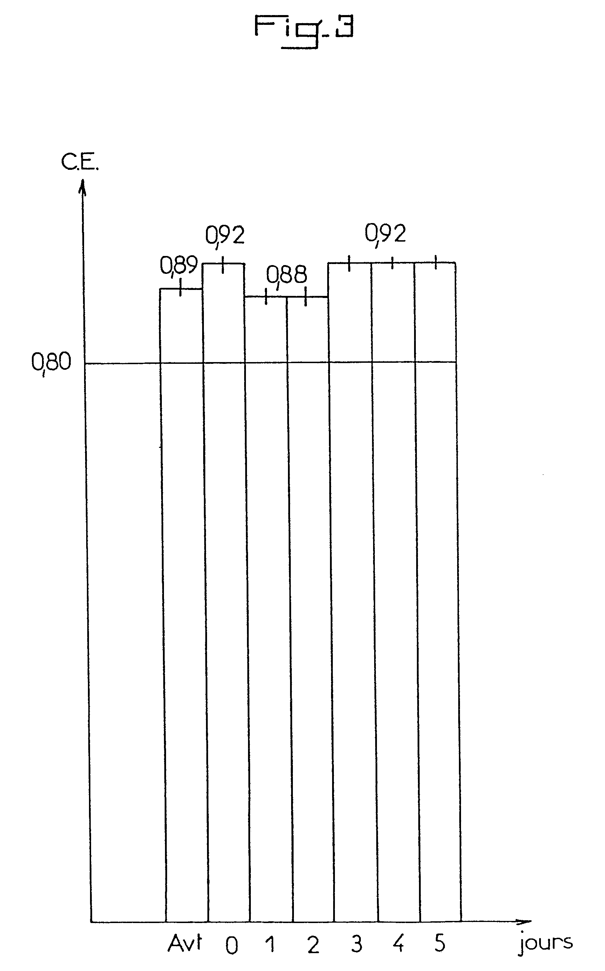

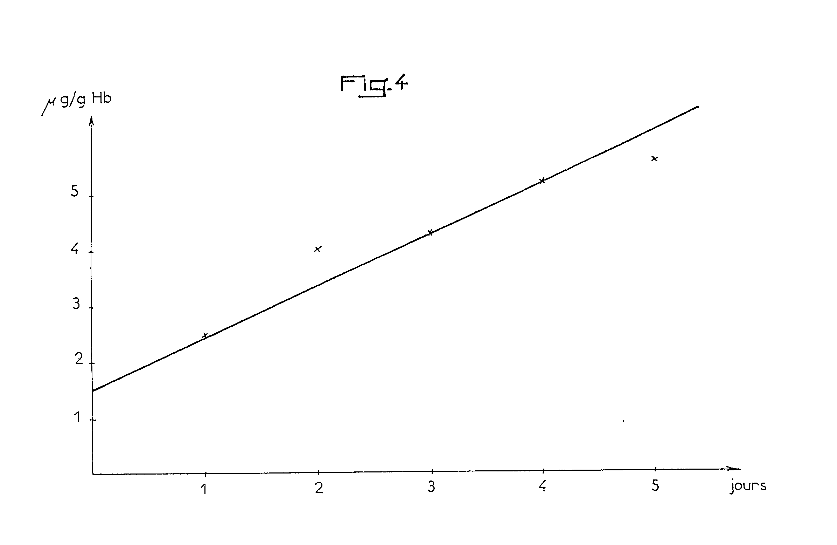

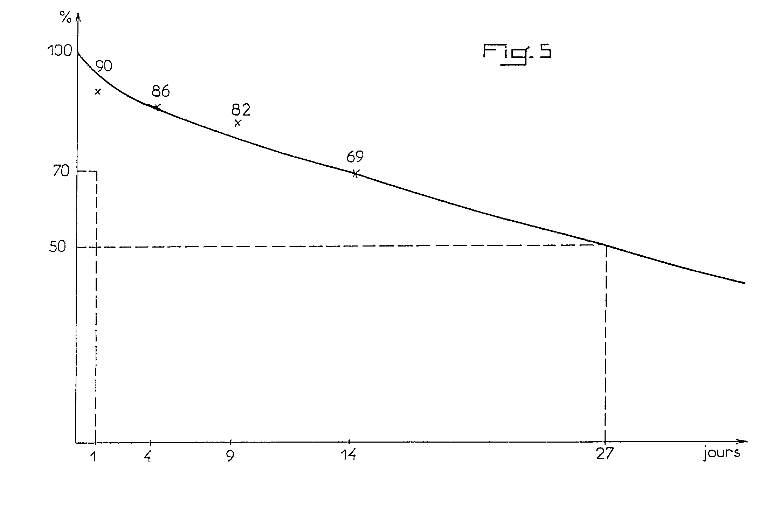

– charge énergétique: conservée dans le milieu protecteur présenté, la charge énergétique est remarquablement stable et voisine de 0.90, pratiquement comme le sang frais (figure 3)
– l'hémoglobine libre reste également très stable pendant la durée de l'étude donnant des valeurs 4 fois inférieures à la barre limite de 200 mg par unité.
– le dosage de l'ammonium montre des valeurs basses au 5ème jour, indiquant un très faible catabolisme des protéines membranaires (figure 4)
– la résistance globulaire est augmentée
– la survie radio-isotopique 24 heures après transfusion des hématies marquées au 51 Cr au 3ème jour de conservation montre des chiffres analogues à ceux du jour 0, la demi-vie est de 27 jours, ce qui est un chiffre normal (figure 5).

Quelles que soient la technique de congélation et la température de stockage, les concentrés érythrocytaires décongelés pris comme exemple, qu'ils soient conservés ou non, doivent répondre aux critères définis par la Commission de Contrôles de qualité de la Société Nationale de Transfusion Sanguine. Ces critères ont été comparés avec les valeurs trouvées

– au jour 0 sur du sang décongelé simple,
– au jour 5 sur du sang décongelé protégé par la solution objet de la présente invention.

Le tableau suivant montre que les chiffres trouvés restent très largement dans les normes.

| Un concentré globulaire contient | normes officielles | sang décongelé J.O. | J.5* |
|---|---|---|---|
| Hb totale | ⩾34 g | 47.6 g | 47.5 |
| Hématocrite | ⩽80% | 75% | 60% |
| Hb libre totale | ⩽200 mg | 15 mg | 49 mg |
| Leucocytes résiduels | ⩽1.10⁸ | 0.6.10⁸ | 0.2.10⁸ |
| Stérilité | nég. | nég. | nég. |

* Avec solution protectrice

Des mesures effectuées au 20ème jour ont montré:

– des taux d'Hb libre de 154 mg par unité en moyenne, donc encore au-dessous de la barre des 200 mg fixée par les normes ministérielles,

– des taux d'ATP de 2.6 $\mu$mol/g Hb en moyenne donc assurant en principe la recirculation de 70% des hématies transfusées.

Il est certain que la solution de conservation proposée assure une très bonne protection des hématies décongelées prises comme exemple, pendant une semaine.

Les différents composants sont à l'état pulvérulent et sont mélangés dans l'eau distillée.

A cet effet, la préparation d'une telle solution consiste à peser séparément sur une balance de précision les différents composants, puis à les mélanger, à introduire dans un ballon jaugé de un litre contenant 0,9 litre d'eau distillée et à y ajouter le mélange des poudres, à agiter l'ensemble afin de réaliser un mélange rapide, puis à mettre au bain marie pendant deux heures à une température de 37°C pour assurer une dissolution complète des poudres, à ajuster ensuite le volume à 1 litre par adjonction d'eau distillée, à mesurer le pH et l'osmolarité, et enfin, à filtrer la solution sous membrane stérilisante.

L'invention à également pour objet un procédé de traitement d'hématies humaines décongelées, déglycérolées et lavées. Ce procédé consiste, après décongélation desdites hématies dans un bain marie à 42°C pendant 9 minutes, à réaliser une déglycérolation par prédilution manuelle dans une bouteille en verre neutre de 1 litre, par transvasement à l'aide de tubulures de transfert, simultanément et pendant une durée de 5 minutes, des hématies décongelées et de 400 ml de solution de chlorure à 3,5%, et à effectuer un lavage du mélange obtenu par branchement de la bouteille sur une tubulure de la poche de lavage d'un lave-globule automatique, les autres tubulures de la poche de lavage étant reliées à des bouteilles de 500 ml de chlorure de sodium isotonique à 0,9%. Le sang déglycérolé est introduit dans la poche de lavage et centrifugé à 3000 t/ min. pendant 3 minutes, puis le surnageant est éliminé par évacuation dans une poche de recueil des eaux de lavage. Trois lavages successifs sont ainsi réalisés en chlorure de sodium isotonique, en introduisant à chaque lavage, automatiquement, 500 ml de solution dans la poche de lavage et en réalisant un barbotage d'une durée de 100 secondes suivi d'une centrifugation du mélange à 3000 t/min. pendant 90 secondes et d'une évacuation du surnageant dans la poche de recueil, les hématies restant dans la poche de lavage sous forme de concentré érythrocytaire. Le dernier lavage est suivi d'une centrifugation à 3000 t/min. pendant 3 minutes afin d'obtenir un hématocrite de 85%. Le concentré érythrocytaire lavé obtenu est introduit dans une poche plastique, ou autre, à usage transfusionnel, au moyen de la tubulure de transfert de cette dernière, puis la poche est pesée et le volume de concentré est noté.

Ce concentré érythrocytaire est alors traité selon un procédé de traitement qui est aussi objet de l'invention. Ce procédé consiste à mettre la poche de concentré en agitation constante et douce sur le plateau d'un agitateur de concentrés plaquettaires, ou analogue, et à ajouter un demi-volume de solution conservatrice au moyen de la tubulure de transfert de la poche, en 10 minutes, la tubulure de transfert étant alors soudée à 2 cm, 2,5 cm et 3 cm de la poche à l'aide d'une soudeuse spéciale pour tubulures plastiques médicales. Cette agitation de la poche est encore poursuivie pendant 20 minutes pour obtenir un sang prêt à l'emploi, qui peut être stocké en armoire réfrigérée ou transporté en conditionnement réfrigéré à 4°C.

En cas de maintien rigoureux de la température de 4°C, les qualités transfusionnelles du sang décongelé ainsi conservé sont assurées pendant 12 jours avec une sécurité absolue pendant 9 jours, alors qu'avec les solutions existantes ce délai ne peut excéder en aucun cas 3 jours, et le plus souvent 24 heures.

Bien entendu, l'invention n'est pas limitée aux modes de réalisation décrits. Des modifications restent possibles, notamment du point de vue des constituants de la solution et de leur concentration, sans sortir pour autant du domaine de protection de l'invention.

**Revendications**

1. Solution protectrice pour la conservation d'hématies humaines décongelées, contenant de l'adénine, du glucose, du saccharose et un tampon phosphates, caractérisée en ce qu'elle présente la composition suivante:

| | | |
|---|---|---|
| Adénine | 0,085 g ± 0,010 | |
| Glucose | 5 | g ± 0,5 |
| Saccharose | 47 | g ± 2 |
| Phosphate monosodique monohydraté | 0,75 | g ± 0,08 |

| | | |
|---|---|---|
| Phosphate disodique dihydraté | 4 | g ± 0,5 |
| Chlorure de sodium | 2,5 | g ± 0,5 |
| Eau distillée qsp | 1000 ml | |

le pH du milieu étant égal à 7,40 ± 0,10 et son os-molarité à 320 ± 10 mOsm.

2. Procédé de traitement d'hématies humaines décongelées par application de la solution suivant la revendication 1, caractérisé en ce qu'il consiste, après décongélation desdites hématies dans un bain marie à 42°C pendant 9 minutes, et lavage du mélange obtenu dans un lave-globule automatique dont le programme est réglé pour obtenir un hématocrite moyen de 85% en fin de lavage, suivi d'une introduction du concentré érythrocytaire lavé obtenu dans une poche plastique, ou autre, à usage transfusionnel, au moyen de la tubulure de transfert de cette dernière, la poche étant pesée et son volume de concentré noté, à mettre la poche en agitation constante et douce sur le plateau d'un agitateur de concentrés plaquettaires, ou analogue, à ajouter alors, au moyen de la tubulure de transfert de la poche, en 10 minutes, un demi-volume de solution conservatrice, à souder la tubulure de transfert à 2 cm, 2,5 cm et 3 cm de la poche à l'aide d'une soudeuse spéciale pour tubulures plastiques médicales, et enfin, à poursuivre l'agitation de la poche pendant 20 minutes pour obtenir un sang prêt à l'emploi qui peut être stocké en armoire réfrigérée ou transporté en conditionnement réfrigéré à 4°C.

**Patentansprüche**

1. Schutzlösung für die Konservierung von aufgetauten roten Blutkörperchen des Menschen, welche Adenin, Glucose, Saccharose und einen Phosphatpuffer enthält, dadurch gekennzeichnet, dass sie die folgende Zusammensetzung aufweist:

| | | |
|---|---|---|
| Adenin | 0,085 g ± 0,010 | |
| Glucose | 5 | g ± 0,5 |
| Saccharose | 47 | g ± 2 |
| Natriumdihydrogenphosphat | 0,75 | g ± 0,08 |
| Dinatriumhydrogenphosphat | 4 | g ± 0,5 |
| Natriumchlorid | 2,5 | g ± 0,5 |
| destilliertes Wasser ad | 1000 ml | |

der pH-Wert des Mediums ist gleich 7,40 ± 0,10 und seine Osmolarität 320 ± 10 mOsmol/l.

2. Verfahren zur Behandlung von aufgetauten roten Blutkörperchen des Menschen durch Anwendung der Lösung gemäss Anspruch 1, dadurch gekennzeichnet, dass es darin besteht, nach Auftauen der besagten, roten Blutkörperchen in einem Wasserbad bei 42°C in 9 min. und Waschen der erhaltenen Mischung in einem automatischen Erythrozytenwaschgerät, dessen Programm so eingestellt ist, dass ein mittlerer Hämatokritwert von 85 Vol.% am Ende des Waschvorgangs erzielt wird, worauf eine Einfüllung des erhaltenen, gewaschenen Erythrozyten-Konzentrats in einen Plastikbeutel oder ähnliches, zur Verwendung für die Transfusion, mit Hilfe des Verbindungsschlauches dieses letzteren folgt, wobei der Beutel gewogen und sein Konzentratvolumen notiert wird, den Beutel auf der Platte eines Schwenkapparates für Thrombozytenkonzentrate oder ähnlichem in konstante und sanfte Bewegung zu versetzen, dann mit Hilfe des Verbindungsschlauchs des Beutels, innerhalb von 10 min, eine halbe Menge der Konservierungslösung beizugeben, den Verbindungsschlauch mit Hilfe eines Spezialschweissgerätes für medizinische Plastikschläuche bei 2 cm, 2,5 cm und 3 cm des Beutels zu verschweissen, und schliesslich das Schwenken des Beutels 20 min lang fortzusetzen, um ein gebrauchsfertiges Blut zu erhalten, das in einem Kühlschrank gelagert oder in einer auf 4°C gekühlten Verpackung transportiert werden kann.

**Claims**

1. Protective solution for preserving thawed human erythrocytes, containing adenine, glucose, saccharose and a phosphate buffer, characterized in that it has the following composition:

| | | |
|---|---|---|
| Adenine | 0.085 g ± 0.010 | |
| Glucose | 5 | g ± 0.5 |
| Saccharose | 47 | g ± 2 |
| Monohydrated monosodium phosphate | 0.75 | g ± 0.08 |
| Dihydrated disodium phosphate | 4 | g ± 0.5 |
| Sodium chloride | 2.5 | g ± 0.5 |
| Distilled water ad | 1000 ml | |

the pH of the medium being equal to 7.40 ± 0.10 and its osmolarity being 320 ± 10 mOsm.

2. Process for the treatment of thawed human erythrocytes by applying the solution according to claim 1, characterized in that it consists, following the thawing of said erythrocytes in a water bath at 42°C for nine minutes and washing the mixture obtained in an automatic blood cell washer, whose program is regulated to obtain a mean hematocrit of 85% at the end of washing, followed by the introduction of the washed erythrocyte concentrate obtained into a plastic bag or the like for transfusion uses by means of the transfer tube of the latter, the bag being weighed and its concentrate volume noted, placing the bag under constant, gentle stirring on the plate of a stirrer for platelet concentrates or the like and then adding by means of the bag transfer tube, within ten minutes, a half-volume of preservative solution, welding the transfer tube at 2 cm, 2.5 cm and 3 cm from the bag using a special welder for medical plastic tubes and finally continuing stirring of the bag for twenty minutes to obtain blood which is ready for use and which can be stored in a refrigerator or transported in a refrigerated condition at 4°C.

Fig-1

Fig. 2

# Fig.3

Fig.4

0 099 315

Fig. 5